# EUROPÄISCHE PATENTANMELDUNG

(11) **EP 4 372 589 A1**
(43) Veröffentlichungstag der Anmeldung: **22.05.2024**
(21) Anmeldenummer: 22207862.8
(22) Anmeldetag: 16.11.2022
(51) Int. Cl.: G06F 21/57, G06F 8/658

(54) **ÜBERWACHUNGSSYSTEM ZUM NACHGELAGERTEN PRÜFEN EINER SYSTEMINTEGRITÄT**

(71) Anmelder: Siemens Aktiengesellschaft, 80333 München (DE)
(72) Erfinder: Falk, Rainer, 85586 Poing (DE); Feist, Christian Peter, 80689 München (DE); Hornung, Peter, 91054 Erlangen (DE); Mantel, Martin, 91325 Adelsdorf (DE); Pyka, Stefan, 85570 Markt Schwaben (DE); Sperl, Franz, 92526 Oberviechtach (DE); Zeschg, Thomas, 81543 München (DE)
(74) Vertreter: Siemens Patent Attorneys

(57) **Zusammenfassung**

Die Erfindung betrifft ein Überwachungssystem (1) zum Prüfen einer Integrität eines rekonfigurierbaren Systems (2), wobei das rekonfigurierbare System (2) eine Mehrzahl an Komponenten (21) aufweist,
das Überwachungssystem (1) aufweisend:
- eine Empfangseinheit, ausgebildet eine Mehrzahl an Datensätzen zu empfangen,
wobei jeder Datensatz (23) der Mehrzahl an Datensätzen von einer der Komponenten (21) der Mehrzahl an Komponenten des rekonfigurierbaren Systems (2) stammt,
wobei jeder Datensatz (23) der Mehrzahl an Datensätzen mindestens eine erfolgte Konfigurationsänderung an jeweils einer Komponente (21) der Mehrzahl der Komponenten des rekonfigurierbaren Systems (2) durch eine Änderungsinformation beschreibt,
wobei die Änderungsinformation jeweils eine Art der mindestens einen erfolgten Konfigurationsänderung angibt,

- eine Prüfeinheit, ausgebildet eine Zulässigkeit der jeweils erfolgten Konfigurationsänderung anhand der Änderungsinformation zu prüfen, und
- eine Ausgabeeinheit, ausgebildet in Abhängigkeit eines Ergebnisses des Prüfens eine Ausgabe zu geben.

Außerdem betrifft die Erfindung übergeordnetes System und ein zugehöriges Verfahren.

## Beschreibung

Unabhängig vom grammatikalischen Geschlecht eines bestimmten Begriffes sind Personen mit männlicher, weiblicher oder anderer Geschlechteridentität mit umfasst.

### HINTERGRUND DER ERFINDUNG

### Gebiet der Erfindung

Die vorliegende Erfindung betrifft ein Überwachungssystem zum Prüfen einer Integrität eines rekonfigurierbaren Systems. Die Erfindung betrifft außerdem ein übergeordnetes System und ein zugehöriges Verfahren.

### Beschreibung des Stands der Technik

Eine flexible Produktion, insbesondere im Rahmen von Industrie 4.0, soll eine schnelle Anpassung von Automatisierungslösungen, insbesondere Automatisierungsfunktionen, an sich ändernde Rahmenbedingungen ermöglichen. Dies soll auch durch eine zunehmende Digitalisierung unter Nutzung von offenen Compute-Plattformen für die Realisierung von virtualisierten Automatisierungsfunktionen ermöglicht werden. Die Anpassung vorhandener Automatisierungsfunktionen und die Einführung neuer Automatisierungsfunktionen sollen künftig schneller erfolgen.

Automatisierungssysteme werden daher regelmäßig Änderungen unterworfen sein. Als Konsequenz für den Schutz der Integrität des Automatisierungssystems und der darin enthaltenen Komponenten ergibt sich, dass ein Verhindern von Änderungen, um Integrität sicherzustellen, kein sinnvolles Vorgehen ist, da dann auch keine Änderung der Automatisierungsfunktionen möglich wäre.

Es sind Intrusion Detection Systeme IDS bekannt, die Angriffe erkennen. Diese können die Konfiguration auf Hosts (HIDS, host-based intrusion detection system) oder die Netzwerkkommunikation (NIDS, network-based intrusion detection system) analysieren. Ein IDS kann allgemein eine Änderung des Verhaltens (Anomaly-based IDS) oder ein bekanntes Angriffsmuster (Signature-based IDS) als Angriff erkennen.

Es sind Lösungen für ein File Integrity Monitoring (FIM) bekannt, die Änderungen an einem Dateisystem erkennen.

Bei Distributed Ledgern (Blockchain) ist bekannt, dass durch einen Programmcode (Smart Contract) festgelegt ist, ob eine Transaktion zulässig ist, d.h. ob abstrakt ein bestimmtes Ändern des in dem Distributed Ledger verwalteten Zustands zulässig ist.

Von Rainer Falk, Steffen Fries, "System Integrity Monitoring for Industrial Cyber Physical Systems", International Journal on Advances in Security, vol 11 no 1 & 2, year 2018, http://www.iariajournals.org/security ist ein Integritätsüberwachungssystem für cyber-physische Systeme bekannt. Dabei ist auch bekannt, die Integrität des Cyber Physical Systems (CPS) in der realen, physikalischen Welt durch sogenannte "Trusted Sensors" zu ermitteln. Diese liefern vertrauenswürdige physikalische Messdaten, die für einen Quervergleich mit dem in einem Automatisierungssystem des CPS vorliegenden Prozessabbild verwendet werden können.

Von Rainer Falk, Steffen, Fries, "Enhancing the Resilience of Cyber-Physical Systems by Protecting the Physical-World Interface", International Journal on Advances in Security, vol 13 no 1 & 2, year 2020, http://www.iariajournals.org/security ist bekannt, dass bei einem dynamisch rekonfigurierten cyberphysischen System auch dessen Integritätsüberwachungssystem entsprechend an die jeweils aktuelle Konfiguration (Referenz-Policy) angepasst werden muss (siehe Abschnitt IV.C "Policy Adaptation for Dynamically Reconfigurable CPS").

Bei Betriebssystemen wie z.B. Microsoft Windows sind Wiederherstellpunkte bekannt. Ein Nutzer bzw. Administrator kann bei einem nicht korrekt funktionierenden Windows-System auf einen früheren, funktionsfähigen Konfigurationsstand zurücckehren.

Die Aufgabe der Erfindung besteht darin, eine Lösung für einen verbesserten Schutz der Systemintegrität von dynamisch rekonfigurierbaren Systemen, insbesondere Automatisierungssysteme und industrielle Systeme, bereitzustellen.

### ZUSAMMENFASSUNG DER ERFINDUNG

Die Erfindung ergibt sich aus den Merkmalen der unabhängigen Ansprüche. Vorteilhafte Weiterbildungen und Ausgestaltungen sind Gegenstand der abhängigen Ansprüche. Ausgestaltungen, Anwendungsmöglichkeiten und Vorteile der Erfindung ergeben sich aus der nachfolgenden Beschreibung und den Zeichnungen.

Die Erfindung betrifft ein Überwachungssystem zum Prüfen einer Integrität eines rekonfigurierbaren Systems, wobei das rekonfigurierbare System eine Mehrzahl an Komponenten aufweist,
das Überwachungssystem aufweisend:
- eine Empfangseinheit, ausgebildet eine Mehrzahl an Datensätzen zu empfangen,
   wobei jeder Datensatz der Mehrzahl an Datensätzen von einer der Komponenten der Mehrzahl an Komponenten des rekonfigurierbaren Systems stammt,
   wobei jeder Datensatz der Mehrzahl an Datensätzen mindestens eine erfolgte Konfigurationsänderung an jeweils einer Komponente der Mehrzahl der Komponenten des rekonfigurierbaren Systems durch eine Änderungsinformation beschreibt,
   wobei die Änderungsinformation jeweils eine Art der mindestens einen erfolgten Konfigurationsänderung angibt,
- eine Prüfeinheit, ausgebildet eine Zulässigkeit der jeweils erfolgten Konfigurationsänderung anhand der Änderungsinformation zu prüfen, und
- eine Ausgabeeinheit, ausgebildet in Abhängigkeit eines Ergebnisses des Prüfens eine Ausgabe zu geben.

Das Prüfen der Zulässigkeit basiert nicht auf dem Vergleich der Ist-Konfiguration mit einer festen, vorgegebenen Soll-Konfiguration, sondern auf einem Prüfen, ob die vorgenommenen Konfigurationsänderungen zulässig und/oder plausibel sind.

Die Art der mindestens einen erfolgten Konfigurationsänderung beschreibt eine Art einer erfolgten Änderung einer Konfiguration mindestens einer Komponente der Mehrzahl an Komponenten des rekonfigurierbaren Systems. Die Art der Änderung gibt an, auf welche Weise die Konfiguration geändert wurde. Zusätzlich gibt die Art der Änderung insbesondere an, welche funktionale Kategorie der Konfiguration geändert wurde. Eine funktionale Kategorie der Konfiguration umfassen insbesondere, Sicherheitsfunktionen, Netzwerkfunktionen, Steuerfunktionen, Kommunikationsfunktionen, Verwaltungsfunktionen, und/oder Identifizierungsfunktionen.

Ein positives Ergebnis des Prüfens der Zulässigkeit der jeweils erfolgten Konfigurationsänderung bedeutet, dass eine an einer der Komponenten der Mehrzahl der Komponenten des rekonfigurierbaren Systems erfolgte Konfigurationsänderung zulässig ist. Damit besteht Integrität der jeweiligen Komponente. Liegt für alle Komponenten der Mehrzahl an Komponenten Integrität vor, wird auf Integrität des gesamten rekonfigurierbaren Systems geschlossen. Die Ausgabeeinheit ist ausgebildet die Ausgabe in Abhängigkeit der Integrität der jeweiligen Komponenten und/oder des rekonfigurierbaren Systems zu geben.

Ein negatives Ergebnis des Prüfens der Zulässigkeit der jeweils erfolgten Konfigurationsänderung bedeutet, dass eine an einer der Komponenten der Mehrzahl der Komponenten des rekonfigurierbaren Systems erfolgte Konfigurationsänderung unzulässig ist. Damit besteht keine Integrität der jeweiligen Komponente. Liegt für mindestens eine Komponente der Mehrzahl an Komponenten keine Integrität vor, wird auf mangelnde Integrität des gesamten rekonfigurierbaren Systems geschlossen. Die Ausgabeeinheit ist ausgebildet die Ausgabe in Abhängigkeit der nicht vorhandenen Integrität der jeweiligen Komponenten und/oder des rekonfigurierbaren Systems zu geben.

Das rekonfigurierbare System ist insbesondere als ein Cyber-Physical-System (CPS) ausgebildet.

Unter Mehrzahl ist im Sinne der Erfindung ein Plural zu erstehen. Mehrzahl ist im Sinne der Erfindung nicht als ein größerer Anteil einer bestimmten Anzahl zu verstehen. Mehrzahl bedeutet im Sinne der Erfindung insbesondere mindestens 3, vorzugsweise mehr als 10, besonders bevorzugt mehr als 50 oder mehr als 100. Dies gilt sowohl für die Mehrzahl an Komponenten als auch für die Mehrzahl an Datensätzen.

Die Komponenten der Mehrzahl an Komponenten des rekonfigurierbaren Systems sind ausgebildet, die Mehrzahl an Datensätze bereitzustellen. Die Mehrzahl an Datensätzen ist zum Know-How-Schutz jeweils insbesondere Privacy-geschützt, insbesondere durch Anonymisierung, Pseudonymisierung, durch Nutzung von Verifiable Credentials / Verifiable Presentations, oder durch Privacy-schützende Kryptoverfahren wie homomorphe Verschlüsselung oder Secure Multiparty Computation.

Jeder Datensatz der Mehrzahl an Datensätzen wird insbesondere durch die betroffene Komponente selbst, durch eine der betroffenen Komponente zugehörige Zusatzkomponente oder durch eine App der betroffenen Komponente gebildet und bereitgestellt. Eine Zusatzkomponente oder App kann dazu wiederholt die Konfiguration einer Komponente ermitteln, insbesondere über OPC UA oder über NETCONF, und die ermittelten Änderungen gegenüber zurückliegend ermittelten Konfigurationen kryptographisch geschützt bestätigen. Bei einer Überwachung von Konfigurationsänderungen auf einer Komponente selbst kann ggf. Zusatzinformation ermittelt und bestätigt werden, insbesondere was zu der Konfigurationsänderung geführt hat, insbesondere welches Authentisierungscredential und/oder welches Kommunikationsprotokoll und/oder welche Geräteschnittstelle bei einer Konfigurationsänderung angewandt wurde (Identifier oder Authentisierungs-Credential/Zertifikat bei einem Remote-Zugang, insbesondere über HTTPS, NETCONF/TLS, NETCONF/ssh, OPC UA).

Die Integritätsbestätigung ist zum Know-How-Schutz insbesondere Privacy-geschützt, insbesondere durch Anonymisierung, Pseudonymisierung, durch Nutzung von Verifiable Credentials/ Verifiable Presentations, oder durch Privacy-schütztende Kryptoverfahren wie homomorphe Verschlüsselung oder Secure Multiparty Computation.

Bezügliche einem rekonfigurierbaren System, insbesondere Cyber-Physical-System, haben insbesondere der Anlagenbetreiber, mehrere Maschinenbauer der verwendeten Produktionsmaschinen, mehrere Gerätehersteller der verwendeten Automatisierungskomponenten, ein Integrator, eine IT-Abteilung oder ein IoT-Cloud-Provider ein berechtigtes Interesse an einer Systemintegritätsüberwachung. Sie sind jedoch jeweils nur für einen Teilbereich zuständig (area of responsibility, AOR). Daher wird weiterhin vorgeschlagen, die Mehrzahl an Datensätze gemäß unterschiedlicher Verantwortungsbereiche zu filtern und einem jeweiligen AOR-Überwachungssystem zum Prüfen bereitzustellen. Ein AOR-Überwachungssystem bestätigt wiederum, ob die überprüften Änderungen aus der jeweiligen Verantwortungsperspektive zulässig sind.

Daraus wird ein Cyber Physical System (CPS) Gesamtbild ermittelt, das angibt, aus Sicht von welchen AOR-Verantwortungsbereichen die Integrität des Systems gegeben ist. Diese Information wird insbesondere einem Produktionsplanungssystem oder einem Produktionsdaten-Verwaltungssystem bereitgestellt. Die Produktionsplanung für weitere Produktionsvorgänge oder die Freigabe von erzeugten Produkten oder nachgelagerte Prüfungen an den erzeugten Produkten kann abhängig davon vorgenommen werden, ob bei der Produktion das dafür verwendete CPS bzw. die dafür verwendeten CPS-Bereiche, insbesondere Produktionsmaschinen, in einem zulässigen Zustand sind beziehungsweise waren. Auch kann die Information an ein CPS-Komponentenmanagementsystem übergeben werden, insbesondere ein vereinheitlichtes Gerätemanagementsystem (common device management), um ein Rollback von nicht als zulässig erkannten Konfigurationsänderungen zu veranlassen.

Zusammengefasst ist eine Idee der Erfindung, ein Überwachungssystem, insbesondere Integritätsüberwachungssystem, für industrielle Automatisierungssysteme, welches die Mehrzahl an Datensätze und damit die Änderungsinformationen der Mehrzahl an Komponenten erfasst. Das Überwachungssystem überprüft die Zulässigkeit der Änderungen der Mehrzahl der Komponenten des rekonfigurierbaren Systems.

Ein Aspekt der Erfindung besteht somit in einem Überwachungssystem, welches erfolgte Konfigurationsänderungen verlässlich erfasst, und die Art der erfolgten Konfigurationsänderungen durch einen Programmcode, insbesondere durch einen Smart Contract, nachgelagert überprüft. Nachgelagert bedeutet, dass die Konfigurationsänderungen zu dem Zeitpunkt der Prüfung bereits erfolgt sind.

Es wird somit eine Integritätsüberwachungssystem für ein rekonfigurierbares System vorgeschlagen, welches Konfigurationsänderungen zulässt, indem es nicht wie bekannte Integritätsüberwachungswerkzeuge (File Integrity Monitoring (FIM), Intrusion Detection System (IDS)) Änderungen vor deren Durchführung als unzulässig erkennt, sondern indem es die Art der beobachtbaren Änderungen überwacht und plausibilisiert.

Abstrakt kann dies als eine Art Distributed Ledger ("Blockchain") verstanden werden, bei dem jedoch Transaktionen (hier: Konfigurationsänderungen des rekonfigurierbaren Systems) in einer Transaktionsdatenbank zuerst erfasst werden. Erst nachträglich wird überprüft, ob diese bereits (weil zuerst erfasst) in der Datenbank vorliegenden Transaktionen gemäß eines Smart Contracts zulässig sind.

Daraus ergibt sich für ein Cyber Physical System (CPS), das unter verteilter Kontrolle (Distributed Ledger, Blockchain) liegt, der Vorteil, dass Wiederherstellpunkte, ermöglichen, bei Problemen oder unzulässigen Manipulationen auf einen früheren, noch funktionsfähigen Konfigurationsstand des CPSs zurückkehren.

Ein herkömmlicher Security-Ansatz ist eine Zugriffskontrolle, die Zugriffe eng kontrolliert, sodass nur zulässige Aktionen durchführbar sind. Ein weiterer herkömmlicher Ansatz besteht darin, Abweichungen von einem als integer definierten Referenzzustand (eingerichtet oder angelernt) als Manipulation zu erkennen. Solche herkömmlichen Security-Ansätze gehen von einer festen Konfiguration aus. Der Nachteil ist, dass sie daher nicht geeignet sind, wenn Konfigurationsänderungen regelmäßig erfolgen sollen, um ein Produktionssystem flexibel an unterschiedliche Anforderungen anzupassen. Solche Security-Ansätze würden, wenn sie restriktiv eingerichtet sind, eine flexible Konfigurationsanpassung beziehungsweise Rekonfiguration von industriellen Automatisierungs- und Steuerungssystemen (im Allgemeinen: Industrial IoT oder Cyber Physical Systems) behindern. Sie sind deshalb nur bei statischen industriellen Systemen sinnvoll. Bei Systemen, die dynamisch rekonfigurierbar sein sollen, müssen hingegen weitreichende Änderungen zugelassen werden.

In der vorliegenden Anmeldung wird hingegen als komplementärer Security-Ansatz vorgeschlagen, die erfolgten Konfigurationsänderungen verlässlich zu erfassen und nachgelagert die Zulässigkeit der erfolgten Änderungen zu überprüfen.

In einer Weiterbildung der Erfindung ist das rekonfigurierbare System ausgebildet als:
- ein Cyber-Physical-System und/oder
- ein Internet-of-Things-System und/oder
- ein industrielles System und/oder
- ein Automatisierungssystem und/oder
- ein Fertigungssystem und/oder
- ein Steuerungssystem und/oder
- ein Roboter und/oder
- eine Produktionsmaschine und/oder
- ein führerloses Transportsystem.

In einer weiteren Weiterbildung der Erfindung ist die Empfangseinheit zusätzlich ausgebildet die Mehrzahl an Datensätze abzurufen.

Die Mehrzahl an Datensätze ist insbesondere von einer Datenbank durch die Empfangseinheit abrufbar. Die Mehrzahl an Datensätze und somit die Änderungsinformationen der Mehrzahl an Komponenten werden insbesondere in einer Datenbank (auch als CPS Component Configuration Change Database bezeichenbar) festgehalten, insbesondere in einer relationalen Datenbank, in einer Objektdatenbank oder in einer verteilten Transaktionsdatenbank (auch als Distributed Ledger und/oder Blockchain bezeichenbar). Es liegt somit eine Historie der erfolgten Änderungen an der Mehrzahl an Komponenten des rekonfigurierbaren Systems vor.

In einer weiteren Weiterbildung der Erfindung weist die Mehrzahl an Datensätzen jeweils einen kryptographischen Schutz auf.

Dies hat den Vorteil, dass die Mehrzahl an Datensätze gegen Manipulation geschützt sind und somit von einer validen Änderungsinformation ausgegangen wird.

In einer weiteren Weiterbildung der Erfindung gibt die Änderungsinformation:
- Einen Zeitpunkt und/oder
- einen zeitlichen Beginn und/oder
- einen zeitlichen Abschluss und/oder
- einen Initiator und/oder
- einen Ort einer Initiation
der mindestens einen erfolgten Konfigurationsänderung an.

Der Initiator der mindestens einen erfolgten Konfigurationsänderung ist auch als Ausführer der mindestens einen erfolgten Konfigurationsänderung bezeichenbar.

Das Überwachungssystem überprüft erfindungsgemäß die Zulässigkeit der jeweils erfolgten Konfigurationsänderungen an der Mehrzahl der Komponenten des rekonfigurierbaren Systems. Dazu kann zusätzlich zu der Art der mindestens einen erfolgten Konfigurationsänderung ausgewertet werden, wann und/oder durch wen und/oder an welchem Ort welche Änderung an einer jeweiligen Komponente des rekonfigurierbaren Systems erfolgt ist. Dies hat den Vorteil, dass weitere Informationen einbezogen werden, um die Zulässigkeit zu prüfen und das Ergebnis des Prüfens belastbarer ist. Dabei kann die Zulässigkeit einer einzelnen Konfigurationsänderung überprüft werden. Ebenso kann die Zulässigkeit einer Folge von mehreren Konfigurationsänderungen überprüft werden.

In einer weiteren Weiterbildung der Erfindung umfasst die Art der mindestens einen erfolgten Konfigurationsänderung:
- eine sicherheitsbezogene Änderung und/oder
- eine geänderte Netzwerkkonfiguration und/oder
- eine Änderung an einer industriellen Projektierung und/oder
- ein Einspielen eines Updates.

In einer weiteren Weiterbildung der Erfindung ist die Prüfeinheit ausgebildet, die Änderungsinformation einer ersten erfolgten Konfigurationsänderung einer ersten Komponente der Mehrzahl an Komponenten im Zusammenhang mit der Änderungsinformation einer zweiten erfolgten Konfigurationsänderung einer zweiten Komponente der Mehrzahl an Komponenten zu prüfen.

Erfindungsgemäß ist die mindestens eine erfolgte Konfigurationsänderung einer Komponente für sich allein bereits als unzulässig erkennbar, zusätzlich ist aber auch deren Auswirkung auf das rekonfigurierbare System, indem insbesondere Inkonsistenzen zwischen den Komponenten und einer weiteren erfolgten Konfigurationsänderung erkennbar und als unzulässig bewertbar. Somit ist die Prüfeinheit insbesondere ausgebildet zu prüfen, ob die Komponenten konsistent rekonfiguriert wurden, insbesondere während einer Einrichtungsphase einer Produktion.

Es wird zusätzlich insbesondere geprüft, ob Änderungen an den Komponenten, welche mögliche Auswirkungen auf das gesamte rekonfigurierbare System haben, insbesondere geänderte Netzwerkkonfiguration, inhaltlich konsistent sind und auf konsistente Art vorgenommen werden. Dadurch kann insbesondere erkannt werden, ob gleichartige oder ähnliche Änderungen innerhalb eines definierten Zeitraums auf mehreren Komponenten angewendet werden.

Außerdem ist die Prüfeinheit insbesondere ausgebildet zu prüfen, ob erfolgte Konfigurationsänderung einem unterschiedlichen Zwecken dienen und/oder auf unterschiedliche Änderungs-Vorgänge aufgeteilt sind. Durch Inkonsistenten in diesen Kriterien ist insbesondere eine unzulässige Konfiguration erkennbar.

In einer weiteren Weiterbildung der Erfindung ist die Prüfeinheit ausgebildet:
- einen Programmcode, insbesondere Smart Contract und/oder
- einen auf künstlicher Intelligenz basierenden Algorithmus und/oder
- mindestens eine Sicherheitsrichtlinie
heranzuziehen, um die Zulässigkeit zu prüfen.

Das Prüfen der Zulässigkeit von erfolgten Konfigurationsänderungen erfolgt somit insbesondere durch einen Smart Contract, d.h. generell durch einen Programmcode. Dieser überprüft nach definierbaren Kriterien, wodurch eine zulässige Konfigurationsänderung des CPS gegeben ist.

Alternativ oder zusätzlich erfolgt das Prüfen der Zulässigkeit von erfolgten Konfigurationsänderungen durch einen auf künstlicher Intelligenz basierenden Algorithmus, d.h. AIbasiert, insbesondere indem zulässige Konfigurationsänderungen in einer Anlernphase anhand von Kriterien trainiert werden und unzulässige Änderungen in der produktiven Phase erkannt und gegebenenfalls verboten werden, d.h. als unzulässig erkannt werden.

In einer weiteren Weiterbildung der Erfindung ist die Prüfeinheit ausgebildet:
- eine Auswirkung der mindestens einen erfolgten Konfigurationsänderung und/oder
- ein verändertes Eingabeverhalten und/oder Ausgabeverhalten der Mehrzahl an Komponenten durch die mindestens eine erfolgte Konfigurationsänderung, insbesondere eine funktionale Änderung, eine Performance-Änderung und/oder eine Änderung des Echtzeitverhaltens und/oder
- einen Zweck der mindestens einen erfolgten Konfigurationsänderung
heranzuziehen, um die Zulässigkeit zu prüfen.

Es wird somit weiterhin vorgeschlagen, das Eingabeverhalten und/oder ein Ausgabeverhalten der Mehrzahl an Komponenten bezüglich der Mehrzahl an Datensätzen zu ermitteln. Dies kann direkt an Ein-/Ausgabeschnittstellen oder an einem Datenbus ermittelt werden. Ein verändertes Eingabeverhalten und/oder ein Ausgabeverhalten ist selbst dann erkennbar, wenn es zu unbeabsichtigten, nicht vorhergesehenen indirekten Auswirkungen auf manche Automatisierungsfunktionen kommt. Es wird also sowohl das Ein-/Ausgabeverhalten des CPS bzw. der darin vorhandenen Komponenten überwacht, wie auch die erfolgten Konfigurationsänderungen an Komponenten des CPS. Mit dieser Information wird insbesondere ermittelt, welche Konfigurationsänderung zu einem unerwünschten Ein-/Ausgabeverhalten geführt hat. Insbesondere wird durch einen zusätzlichen Quervergleich der erfassten Konfigurationsänderungen der CPS-Komponenten und des Ein-/Ausgabeverhaltens von CPS-Automatisierungs-/Steuerungsfunktionen erkannt, welche Änderungen zu einem unzulässigen CPS-Verhalten geführt haben könnten. Anschließend erfolgt insbesondere automatisch ein Roll-Back auf eine korrekt funktionierende Version.

In einer weiteren Weiterbildung der Erfindung ist die Prüfeinheit außerdem ausgebildet,
- eine Bewertung einer Integrität der jeweiligen Komponente der Mehrzahl an Komponenten und/oder
- eine Bewertung einer Integrität des rekonfigurierbaren Systems
anhand der Änderungsinformation zu erstellen.

Nach dieser Ausführungsform klassifiziert das Überwachungssystem Komponenten der Mehrzahl an Komponenten und/oder das rekonfigurierbare System nicht nur als integer oder nicht integer, sondern gibt zusätzlich eine Bewertung der Integrität an, insbesondere in Form eines Vertrauenswürdigkeitsmaßes. Eine höhere Bewertung bedeutet eine höhere Wahrscheinlichkeit für Integrität. Eine verglichen niedrige Bewertung bedeutet eine niedrigere Wahrscheinlichkeit für Integrität. Zusätzlich ist in der Bewertung insbesondere eine Information enthalten, welche Konfigurationsänderung oder welche Kombination an Änderungen, insbesondere als Referenz auf die Änderung(en), zu der niedrigeren Bewertung der Integrität geführt haben.

Die Bewertung und/oder das Vertrauenswürdigkeitsmaß ist für das rekonfigurierbare System als Ganzes ermittelbar. Ebenso sind, mehrere Vertrauenswürdigkeitsmaße für unterschiedliche Teilbereiche des rekonfigurierbaren Systems zu ermittelbar. Die Teilbereiche können fest vorgegeben sein, vorzugsweise werden jedoch die Teilbereiche dynamisch ermittelt, die jeweils ein einheitliches Vertrauenswürdigkeitsmaß aufweisen.

In einer weiteren Weiterbildung der Erfindung ist die Ausgabe als:
- eine Integritätsbestätigung und/oder
- eine kryptographisch geschützte Integritätsbestätigung und/oder
- eine Integritätsbewertung und/oder
- eine Warnmeldung und/oder
- ein Warnsignal und/oder
- ein Alarm und/oder
- ein Befehl eines Produktionsstopps
ausgebildet.

Falls die Änderung als nicht zulässig erkannt wird, erfolgt in einer Ausführungsform eine entsprechende Ausgabe. Alternativ oder zusätzlich wird ein Alarm ausgelöst oder Produktionsstopp eingeleitet.

Wenn die Änderungen als zulässig erkannt wurden, wird optional eine kryptographisch geschützte Integritätsbestätigung, insbesondere Integritätsattestierung gebildet, die bestätigt, dass sich das rekonfigurierbare System aktuell oder in einem definierten Zeitraum in einem zulässigen, integren Zustand befindet, beziehungsweise befunden hat.

Die Integritätsbestätigung wird nach dieser Ausführungsform durch die Ausgabeeinheit gebildet und ausgegeben. Alternativ oder zusätzlich wird eine Integritätsbestätigung, auch als Integritätsattestierung bezeichenbar, insbesondere durch eine nachgelagerte Integritätsbestätigungseinheit, insbesondere einen CPS-System-Integritätsattestierer, gebildet und ausgegeben. Im Falle einer nachgelagerten Integritätsbestätigungseinheit erhält diese das Ergebnis des Prüfens der Zulässigkeit, welches von der Prüfeinheit gebildet wird.

Die Erfindung umfasst außerdem ein übergeordnetes System aufweisend:
- ein Überwachungssystem nach einem der vorherigen Ansprüche und
- ein rekonfigurierbares System, wobei das rekonfigurierbare System die Mehrzahl an Komponenten aufweist.

Die Mehrzahl an Komponenten ist ausgebildet, die Mehrzahl an Datensätzen bereitzustellen. Die Komponenten sind insbesondere als Automatisierungskomponenten ausgebildet. Dazu wird auf den Komponenten eine Einheit zum Ermitteln von Konfigurationsänderungen und insbesondere zum kryptographisch geschützten Bestätigen der erkannten Konfigurationsänderungen vorgesehen.

In einer weiteren Weiterbildung der Erfindung weist das übergeordnete System außerdem auf:
- eine Datenbank, ausgebildet die Mehrzahl an Datensätzen bereitzustellen und/oder
- ein Attestierer, ausgebildet eine Integritätsattestierung in Abhängigkeit der Ausgabe zu erstellen.

Die Erfindung umfasst außerdem ein Verfahren zum Prüfen einer Integrität eines rekonfigurierbaren Systems, wobei das rekonfigurierbare System eine Mehrzahl an Komponenten aufweist, mit den Schritten:
- ein Empfangen einer Mehrzahl an Datensätzen,
   wobei jeder Datensatz der Mehrzahl an Datensätzen von einer der Komponenten der Mehrzahl an Komponenten des rekonfigurierbaren Systems stammt,
   wobei jeder Datensatz der Mehrzahl an Datensätzen mindestens eine erfolgte Konfigurationsänderung an jeweils einer Komponente der Mehrzahl der Komponenten des rekonfigurierbaren Systems durch eine Änderungsinformation beschreibt,
   wobei die Änderungsinformation jeweils eine Art der mindestens einen erfolgten Konfigurationsänderung angibt,
- ein Prüfen einer Zulässigkeit der jeweils erfolgten Konfigurationsänderung anhand der Änderungsinformation zu prüfen, und
- ein Ausgeben einer Ausgabe in Abhängigkeit eines Ergebnisses des Prüfens.

Eine weitere Weiterbildung der Erfindung betrifft ein erfindungsgemäßes Verfahren zum Prüfen einer Integrität eines rekonfigurierbaren Systems durch ein erfindungsgemäßes Überwachungssystem.

### KURZE BESCHREIBUNG DER ZEICHNUNGEN

Die Besonderheiten und Vorteile der Erfindung werden aus den nachfolgenden Erläuterungen mehrerer Ausführungsbeispiele anhand der schematischen Zeichnungen ersichtlich.

Es zeigen
- Fig. 1: eine schematische Darstellung eines übergeordneten Systems aufweisend u.a. ein erfindungsgemäßes Überwachungssystem und
- Fig. 2: ein Ablaufdiagramm des erfindungsgemäßen Verfahrens.

### DETAILLIERTE BESCHREIBUNG DER ERFINDUNG

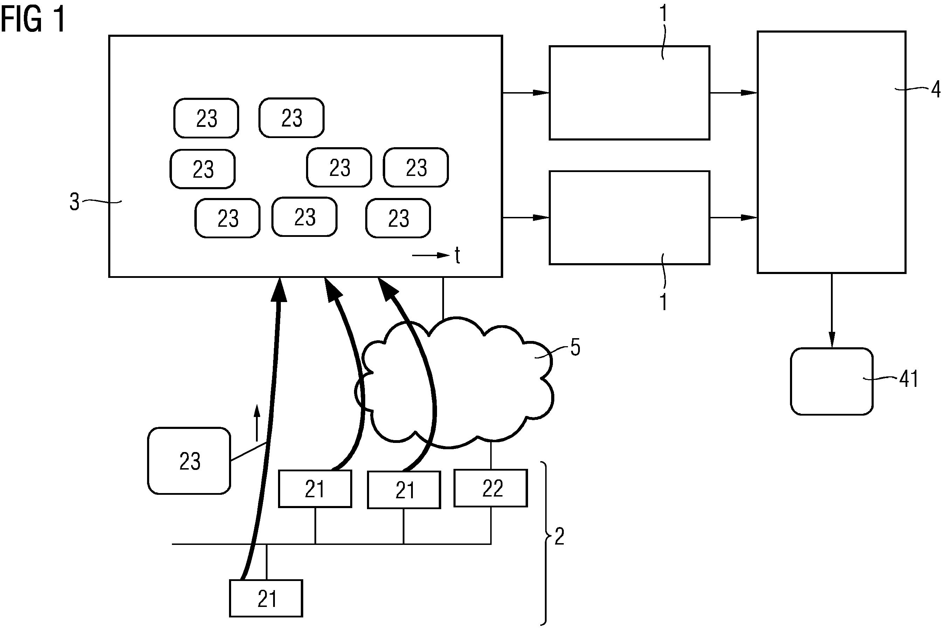

Fig. 1 zeigt ein übergeordnetes System aufweisend:
- ein erfindungsgemäßes Überwachungssystem 1, aufgeteilt in zwei Überwachungssysteme 1 für unterschiedliche Teilbereiche eines rekonfigurierbaren Systems 2,
- das rekonfigurierbares System 2, wobei das rekonfigurierbare System 2 die Mehrzahl an Komponenten 21 aufweist, die Mehrzahl an Komponenten 21 ist über ein Gateway 22 und ein Netzwerk 5 mit einer Datenbank 3 verbunden,
- die Datenbank 3, ausgebildet die Mehrzahl an Datensätzen 23 an die Überwachungssysteme 1 bereitzustellen (gespeichert über die Zeit t) und die Mehrzahl an Datensätzen 23 von dem rekonfigurierbaren Systems 2 zu empfangen, wobei jeder Datensatz der Mehrzahl an Datensätzen 23 mindestens eine erfolgte Konfigurationsänderung an jeweils einer Komponente 21 der Mehrzahl der Komponenten 21 des rekonfigurierbaren Systems 2 durch eine Änderungsinformation beschreibt,
   wobei die Änderungsinformation jeweils eine Art der mindestens einen erfolgten Konfigurationsänderung angibt, und
- ein Attestierer 4, ausgebildet eine Integritätsattestierung 41 in Abhängigkeit einer Ausgabe des Überwachungssystems 1 zu erstellen.

Fig. 1 zeigt somit insbesondere ein Realisierungsbeispiel mit drei CPS-Komponenten 21 in einem Automatisierungsnetzwerk 2. Außerdem sind zwei Systemintegritätsüberwachungseinheiten 1 für zwei unterschiedliche Verantwortungsbereiche gezeigt. Ein Verantwortungsbereich kann beispielsweise durch eine Teilmenge der CPS-Komponenten 21 gegeben sein, und/oder durch die Art, d.h. die funktionale Kategorie, von erfolgten Konfigurationsänderungen.

Anschaulich kann das vorgeschlagene Überwachungssystems 1, auch Integritätsüberwachungssystem 1, als eine Art Distributed Ledger (Blockchain) verstanden werden, bei dem ein Smart Contract die Zulässigkeit einer Folge von Transaktionen, erfasst in den Datensätzen 23, überprüft. Die Konfigurationsänderungen sind aber bereits erfolgt und die entsprechenden Transaktionen sind bereits in der Datenbank 3 hinterlegt. Deren Zulässigkeit wird, anders als bei einer bekannten Blockchain / Distributed Ledger, jedoch erst nachgelagert überprüft. Dabei kann weiterhin eine mehrfache Überprüfung entsprechend der unterschiedlichen Verantwortungsbereiche erfolgen, d.h. durch eine Mehrzahl von "Smart Contracts". Es wird ein Ergebnis der Überprüfung bereitgestellt.

Aus dem Ergebnis der Überprüfung wird optional durch einen Attestierer 4 eine Integritätsattestierung 41 ermittelt, um anzuzeigen, dass die bereits erfolgten Konfigurationsänderungen, entsprechend der in der Datenbank 3 hinterlegten Transaktionen zulässig waren oder ob dies nicht der Fall war. In der Integritätsattestierung 41 kann insbesondere angegeben werden, welche Funktionsbereiche, insbesondere für welche Produktionsmaschinen oder welche Fertigungslinien (Area of Responsibility) des rekonfigurierbaren Systems 2 die für die Funktionsbereiche angewendeten Konfigurationsänderungen zulässig waren.

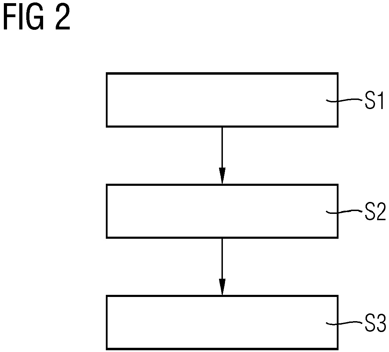

Fig. 2 zeigt ein Verfahren zum Prüfen einer Integrität eines rekonfigurierbaren Systems 2, wobei das rekonfigurierbare System 2 eine Mehrzahl an Komponenten aufweist, mit den Schritten:
- Schritt S1: ein Empfangen einer Mehrzahl an Datensätzen, wobei jeder Datensatz 23 der Mehrzahl an Datensätzen von einer der Komponenten 21 der Mehrzahl an Komponenten des rekonfigurierbaren Systems 2 stammt,
   wobei jeder Datensatz 23 der Mehrzahl an Datensätzen mindestens eine erfolgte Konfigurationsänderung an jeweils einer Komponente 21 der Mehrzahl der Komponenten des rekonfigurierbaren Systems durch eine Änderungsinformation beschreibt,
   wobei die Änderungsinformation jeweils eine Art der mindestens einen erfolgten Konfigurationsänderung angibt,
- Schritt S2: ein Prüfen einer Zulässigkeit der jeweils erfolgten Konfigurationsänderung anhand der Änderungsinformation zu prüfen, und
- Schritt S3: ein Ausgeben einer Ausgabe in Abhängigkeit eines Ergebnisses des Prüfens.

Obwohl die Erfindung im Detail durch die Ausführungsbeispiele näher illustriert und beschrieben wurde, ist die Erfindung durch die offenbarten Beispiele nicht eingeschränkt und andere Variationen können vom Fachmann daraus abgeleitet werden, ohne den Schutzumfang der Erfindung zu verlassen.

## Patentansprüche

1. Überwachungssystem (1) zum Prüfen einer Integrität eines rekonfigurierbaren Systems (2), wobei das rekonfigurierbare System (2) eine Mehrzahl an Komponenten (21) aufweist,
das Überwachungssystem (1) aufweisend:
- eine Empfangseinheit, ausgebildet eine Mehrzahl an Datensätzen zu empfangen,
wobei jeder Datensatz (23) der Mehrzahl an Datensätzen von einer der Komponenten (21) der Mehrzahl an Komponenten des rekonfigurierbaren Systems (2) stammt,
wobei jeder Datensatz (23) der Mehrzahl an Datensätzen mindestens eine erfolgte Konfigurationsänderung an jeweils einer Komponente (21) der Mehrzahl der Komponenten des rekonfigurierbaren Systems (2) durch eine Änderungsinformation beschreibt,
wobei die Änderungsinformation jeweils eine Art der mindestens einen erfolgten Konfigurationsänderung angibt,
- eine Prüfeinheit, ausgebildet eine Zulässigkeit der jeweils erfolgten Konfigurationsänderung anhand der Änderungsinformation zu prüfen, und
- eine Ausgabeeinheit, ausgebildet in Abhängigkeit eines Ergebnisses des Prüfens eine Ausgabe zu geben.

2. Überwachungssystem (1) nach Anspruch 1,
wobei das rekonfigurierbare System (2) ausgebildet ist als:
- ein Cyber-Physical-System und/oder
- ein Internet-of-Things-System und/oder
- ein industrielles System und/oder
- ein Automatisierungssystem und/oder
- ein Fertigungssystem und/oder
- ein Steuerungssystem und/oder
- ein Roboter und/oder
- eine Produktionsmaschine und/oder
- ein führerloses Transportsystem.

3. Überwachungssystem (1) nach einem der vorhergehenden Ansprüche,
wobei die Empfangseinheit zusätzlich ausgebildet ist die Mehrzahl an Datensätzen abzurufen.

4. Überwachungssystem (1) nach einem der vorhergehenden Ansprüche,
wobei die Mehrzahl an Datensätzen jeweils einen kryptographischen Schutz aufweist.

5. Überwachungssystem (1) nach einem der vorhergehenden Ansprüche,
wobei die Änderungsinformation:
- Einen Zeitpunkt und/oder
- einen zeitlichen Beginn und/oder
- einen zeitlichen Abschluss und/oder
- einen Initiator und/oder
- einen Ort einer Initiation
der mindestens einen erfolgten Konfigurationsänderung angibt.

6. Überwachungssystem (1) nach einem der vorhergehenden Ansprüche,
wobei die Art der mindestens einen erfolgten Konfigurationsänderung:
- eine sicherheitsbezogene Änderung und/oder
- eine geänderte Netzwerkkonfiguration und/oder
- eine Änderung an einer industriellen Projektierung und/oder
- ein Einspielen eines Updates
umfasst.

7. Überwachungssystem (1) nach einem der vorhergehenden Ansprüche,
wobei die Prüfeinheit ausgebildet ist,
die Änderungsinformation einer ersten erfolgten Konfigurationsänderung einer ersten Komponente (21) der Mehrzahl an Komponenten im Zusammenhang mit der Änderungsinformation einer zweiten erfolgten Konfigurationsänderung einer zweiten Komponente (21) der Mehrzahl an Komponenten zu prüfen.

8. Überwachungssystem (1) nach einem der vorhergehenden Ansprüche,
wobei die Prüfeinheit ausgebildet ist,
- einen Programmcode, insbesondere Smart Contract und/oder
- einen auf künstlicher Intelligenz basierenden Algorithmus und/oder
- mindestens eine Sicherheitsrichtlinie
heranzuziehen, um die Zulässigkeit zu prüfen.

9. Überwachungssystem (1) nach einem der vorhergehenden Ansprüche,
wobei die Prüfeinheit ausgebildet ist,
- eine Auswirkung der mindestens einen erfolgten Konfigurationsänderung und/oder
- ein verändertes Eingabeverhalten und/oder Ausgabeverhalten der Mehrzahl an Komponenten durch die mindestens eine erfolgte Konfigurationsänderung, insbesondere eine funktionale Änderung, eine Performance-Änderung und/oder eine Änderung des Echtzeitverhaltens und/oder
- einen Zweck der mindestens einen erfolgten Konfigurationsänderung
heranzuziehen, um die Zulässigkeit zu prüfen.

10. Überwachungssystem (1) nach einem der vorhergehenden Ansprüche,
wobei die Prüfeinheit außerdem ausgebildet ist,
- eine Bewertung einer Integrität der jeweiligen Komponente (21) der Mehrzahl an Komponenten und/oder
- eine Bewertung einer Integrität des rekonfigurierbaren Systems (2)
anhand der Änderungsinformation zu erstellen.

11. Überwachungssystem (1) nach einem der vorhergehenden Ansprüche,
wobei die Ausgabe als:
- eine Integritätsbestätigung und/oder
- eine kryptographisch geschützte Integritätsbestätigung und/oder
- eine Integritätsbewertung und/oder
- eine Warnmeldung und/oder
- ein Warnsignal und/oder
- ein Alarm und/oder
- ein Befehl eines Produktionsstopps
ausgebildet ist.

12. Übergeordnetes System aufweisend:
- ein Überwachungssystem (1) nach einem der vorherigen Ansprüche und
- ein rekonfigurierbares System (2), wobei das rekonfigurierbare System (2) die Mehrzahl an Komponenten aufweist.

13. Übergeordnetes System nach Anspruch 12,
außerdem aufweisend:
- eine Datenbank (3), ausgebildet die Mehrzahl an Datensätzen bereitzustellen und/oder
- ein Attestierer (4), ausgebildet eine Integritätsattestierung (41) in Abhängigkeit der Ausgabe zu erstellen.

14. Verfahren zum Prüfen einer Integrität eines rekonfigurierbaren Systems (2), wobei das rekonfigurierbare System (2) eine Mehrzahl an Komponenten aufweist,
mit den Schritten:
- ein Empfangen (S1) einer Mehrzahl an Datensätzen,
wobei jeder Datensatz (23) der Mehrzahl an Datensätzen von einer der Komponenten (21) der Mehrzahl an Komponenten des rekonfigurierbaren Systems (2) stammt,
wobei jeder Datensatz (23) der Mehrzahl an Datensätzen mindestens eine erfolgte Konfigurationsänderung an jeweils einer Komponente (21) der Mehrzahl der Komponenten des rekonfigurierbaren Systems durch eine Änderungsinformation beschreibt,
wobei die Änderungsinformation jeweils eine Art der mindestens einen erfolgten Konfigurationsänderung angibt,
- ein Prüfen (S2) einer Zulässigkeit der jeweils erfolgten Konfigurationsänderung anhand der Änderungsinformation zu prüfen, und
- ein Ausgeben (S3) einer Ausgabe in Abhängigkeit eines Ergebnisses des Prüfens.

15. Verfahren zum Prüfen einer Integrität eines rekonfigurierbaren Systems (2) nach Anspruch 14 durch ein Überwachungssystem (1) nach einem der Ansprüche 1 bis 11.
